# EUROPÄISCHE PATENTANMELDUNG

(11) **EP 1 445 673 A2**
(43) Veröffentlichungstag der Anmeldung: **11.08.2004**
(21) Anmeldenummer: 03029426.8
(22) Anmeldetag: 19.12.2003
(51) Int. Cl.: G05B 19/042

(54) **Web-basierte Darstellung von Automatisierungsprozessen**

(30) Priorität: 05.02.2003 DE 10304646
(71) Anmelder: SIEMENS AKTIENGESELLSCHAFT, 80333 München (DE)
(72) Erfinder: Heller, Rainer, 90542 Eckental (DE); Jachmann, Thomas, 90475 Nürnberg (DE); Middel, Jörg, 91448 Emskirchen (DE)

(57) **Zusammenfassung**

Die Erfindung betrifft ein System, ein Verfahren sowie einen Client und eine Datenverarbeitungsvorrichtung zur Webbasierten Darstellung von Daten in einem System zum Bedienen und Beobachten eines Prozesses. Aktuelle Prozesswerte werden automatisch von einem Server oder einem Automatisierungsgerät (1) an einen Client (2) übertragen, auf dem sie mittels skalierbarer Vektorgrafiken und der Anwendung von SVG (Scalable Vector Graphics) visualisiert werden.

## Beschreibung

Die Erfindung betrifft ein System, ein Verfahren, einen Client sowie ein Automatisierungsgerät zur Darstellung von dynamischen Daten zum Bedienen und Beobachten eines Prozesses, insbesondere im Automatisierungsumfeld.

Die Bereitstellung von Informationen an unterschiedlichen Standorten gewinnt zunehmend Bedeutung. Ein Teil der Bereitzustellenden Informationen unterliegt hierbei einer gewissen Dynamik, d.h. die Informationen liegen nicht statisch vor, sondern werden regelmäßigen oder unregelmäßigen Änderungen unterworfen. Es besteht dementsprechend ein Bedürfnis, Informationen, die sich in beliebigen Zeitabständen ändern, unabhängig von ihrem Herkunfts- bzw. Entstehungsort an anderer Stelle darzustellen. Die Darstellung von Information erfolgt hierbei häufig in Form von Grafiken und ggf. zusätzlich durch textuelle Darstellung. Eine ortsunabhängige Darstellung derartiger Grafiken kann beispielsweise mit Hilfe spezieller Rechnersysteme, sogenannter Systeme zum Bedienen und Beobachten erfolgen. Im folgenden abgekürzt mit B&B-System bezeichnet.

Derartige B&B-Systeme werden vor allem im industriellen Bereich eingesetzt. Beispielsweise werden im Automatisierungsumfeld Daten, die im Rahmen eines Produktions- bzw. Fertigungsprozesses zur Information über den jeweiligen Prozess gesammelt werden, über ein B&B-System einem Benutzer bzw. Bediener der Produktionsanlage zu Informations- und Überwachungszwecken bereitgestellt. Diese einem laufenden Automatisierungsprozess entstammenden Daten unterliegen hierbei ständigen Veränderungen, es handelt sich somit um dynamische Daten, die den aktuellen Zustand eines Prozesses widerspiegeln.

Da die im B&B-System angezeigten Prozesswerte normalerweise zur Überwachung eines automatisierten Prozesses, z.B. eines Fertigungsprozesses dienen, ist eine typische Anforderung an die Darstellung dieser Daten, dass eine Aktualisierung der angezeigten Werte zeitlich nahe am Auftreten des Ereignisses erfolgt, also z.B. einer Änderung eines Wertes. Die im B&B-System mittels der Grafiken visualisierten Daten müssen entsprechend den Änderungen der Prozesswerte aktualisiert werden. Somit sind die Grafiken eines B&B-Systems typischerweise nicht statisch, sondern visualisieren die Prozesswerte mittels Animationen bzw. sich veränderten Darstellungen. Mit zunehmenden Automatisierungsgrad steigen hierbei an die Grafiken eines B&B-Systems auch die Anforderungen.

Da eine Bereitstellung bzw. eine Darstellung und Anzeige der Informationen bzw. Prozesswerte in der Regel an anderer Stelle erfolgt, als die Entstehung der jeweiligen Werte, werden die Informationen im allgemeinen vom Ort der Entstehung zum Ort der Verwendung über verschiedene Kommunikationsmittel übertragen. Um eine möglichst hohe Unabhängigkeit bei der Benutzung von B&B-Systemen zu erzielen, bietet sich eine Verwendung von Web-Technologien an. Hierbei werden die dynamischen Prozesswerte mit Hilfe eines Web-Browsers auf einem Client angezeigt, so ist beispielsweise damit ein Web-basiertes B&B-System realisierbar.

Standard-Web-Browser unterstützen jedoch direkt nur eine Darstellung von Grafiken in Form von statischen Bildern, die von einem Server kommen. Eine Generik bei Grafiken wird derzeit dadurch erreicht, dass eine dynamische Erstellung von Grafiken mit den geänderten Prozesswerten auf dem Server erfolgt und die neu erstellten Grafiken anschließend zum Client zur Anzeige übertragen werden. Die Darstellungen in einem Web-Browser sind hierbei seitenbasiert, so dass in der Regel immer ganze Seiten vom Server angefordert werden müssen. Die Darstellung eines dynamischen Prozesses, beispielsweise die Anzeige eines analogen Thermometers oder die Füllstandsanzeige eines Tanks, erfordert hierbei eine ständige Neuanforderung der vom Server bereitgestellten Seite, um die aktuellen Werte anzeigen zu können.

Um Standard-Web-Clients im Rahmen von B&B-Systemen trotzdem einsetzen zu können, werden heutzutage Java-Applets und ActiveX-Controls verwendet. Sie binden jedoch den Anwender des B&B-Systems an bestimmte Hardware-Plattformen, benötigen eine Installation spezieller Software-Komponenten und stellen Unsicherheitsfaktoren dar.

Die Aufgabe der vorliegenden Erfindung ist, eine verbesserte Anzeige von sich verändernden Daten (dynamische Daten), insbesondere von Prozesswerten im Rahmen einer Automatisierungslösung, auf einem Web-basierten System zum Bedienen und Beobachten (B&B-System) zu ermöglichen.

Die Aufgabe wird gelöst durch ein System zur Darsteloder Anzeige von dynamischen Daten zum Bedienen und Beobachten eines Prozesses, insbesondere von Prozessdaten eines Fertigungs- und/oder Herstellungsprozesses im Automatisierungsumfeld, mit mindestens einer ersten Vorrichtung zur Bereitstellung der dynamischen Daten, mindestens einer zweiten Vorrichtung zum Empfang der dynamischen Daten, wobei die zweite Vorrichtung Mittel zur Visualisierung der dynamischen Daten aufweist, einer Übertragungsvorrichtung zur Kommunikation der ersten Vorrichtung mit der zweiten Vorrichtung, wobei die von der ersten Vorrichtung bereitgestellten dynamischen Daten zur automatischen Übertragung zwischen der ersten Vorrichtung und den Mitteln zur Visualisierung vorgesehen sind und wobei die Visualisierung der dynamischen Daten mittels skalierbarer Vektorgrafiken vorgesehen ist.

Die Aufgabe wird weiterhin gelöst durch ein Verfahren nach Anspruch 13, durch einen Client nach Anspruch 24 und durch eine Datenverarbeitungsvorrichtung nach Anspruch 30.

Der Erfindung liegt die Erkenntnis zugrunde, dass es von Vorteil ist, wenn sich verändernde Informationen, hier als dynamische Daten bezeichnet, ereignisgesteuert und ortsunabhängig auf hohem grafischen Niveau dargestellt werden können. Solche Informationen können im Rahmen eines Automatisierungssystems Prozesswerte sein, die direkt am Produktionsprozess erhoben werden und beispielsweise auf einem System zum Bedienen und Beobachten an anderer Stelle für einen Anlagenbediener visualisiert werden sollen. Hierbei ist es besonders wichtig, dass die Darstellung der Prozesswerte, also der dynamischen Daten, zeitnah und ereignisgesteuert erfolgt.

Durch die vorgeschlagenen automatische Übertragung der dynamischen Daten ist eine zeitnahe und ereignisgesteuerte Darstellung dieser Daten möglich. Die Verwendung der skalierbaren Vektorgrafiken ermöglichen die Erstellung komplexer Grafiken, beispielsweise statistischer Grafiken. Durch die Implementierung einer automatischen Übertragung der angefallenen, sich verändernden Daten, wird ein Anwender des Systems automatisch mit der jeweils aktuellsten Information versorgt, ohne dass von Seiten des Anwenders eine Aktion zum Beschaffen der Daten nötig wäre. Das Aktualisieren der Informationen und ein ständiges Abfragen neuer Informationen wird überflüssig.

Die Daten können sowohl von mehreren Vorrichtungen empfangen und dargestellt werden, wobei die Vorrichtungen dabei unabhängig voneinander auf die Daten zugreifen können. Ebenso ist es möglich, dass eine Vorrichtung, die Daten empfängt und auf der sie anschließend visualisiert werden, auf mehrere Vorrichtungen zugreift, die Daten bereitstellen. Damit können die Daten im Rahmen des Systems beliebig oft und flexibel genutzt werden und Daten unterschiedlicher Quellen können auf einer Anzeige visualisiert werden. Dies ermöglicht hohe Gestaltungsfreiheit in Bezug auf Detaildarstellungen oder auch zusammenfassende Visualisierungen.

Eine weitere vorteilhafte Ausbildung der Erfindung ist dadurch gekennzeichnet, dass die Übertragungsvorrichtung als Intranet und/oder Internet ausgebildet ist. Die Verwendung des Intra- bzw. Internet für die Übertragung von Informationen, insbesondere für die Übertragung von Prozesswerten, die in einem Automatisierungsprozess anfallen, ist besonders geeignet, da eine hohe Flexibilität ermöglicht wird. Beispielsweise kann der Anwender eines B&B-Systems einer Anlage sich an einem beliebigen Ort befinden und sich über das B&B-System Daten anzeigen lassen, wenn als Übertragungsvorrichtung ein Intra- bzw. Internet verwendet wird. Neben der Ortsunabhängigkeit ist ein weiterer Vorteil der Nutzung eines Intra- bzw. Internet der, dass Standardverfahren im Rahmen der Datenübertragung verwendet werden können. Eine spezifische Ausprägung von Datenübertragungs-Protokollen ist in diesem Fall nicht erforderlich. Eine einfache und flexible Übertragung von dynamischen Daten, insbesondere von Prozesswerten wird dadurch gewährleistet.

Eine weitere vorteilhafte Ausbildung der Erfindung ist dadurch gekennzeichnet, dass die erste Vorrichtung zur Bereitstellung der dynamischen Daten als Server, insbesondere als Web-Server, ausgebildet ist. Bei der Verwendung eines Web-Servers als eine mögliche Ausführung des erfindungsgemäßen Systems kann für die Datenübertragung weitgehend auf Standardtechniken zurückgegriffen werden. Eine einfache Bereitstellung der Daten für die Übertragung über ein Intra- bzw. Internet ist hierdurch gewährleistet. Ebenso ist es vorteilhaft, dass die Daten allgemein für berechtigte Nutzer dieser Daten im Rahmen des Systems zur Verfügung stehen. Alle berechtigten Nutzer können dann wahlweise und wiederholt auf die bereitgestellten Daten zugreifen.

Eine weitere vorteilhafte Ausbildung des Systems ist dadurch gekennzeichnet, dass die erste Vorrichtung zur Bereitstellung der dynamischen Daten als Automatisierungsgerät mit Web-Server-Funktionalität ausgebildet ist. Hierdurch wird eine direkte Nutzung und Verarbeitung von Informationen, beispielsweise von Prozesswerten möglich, die direkt am Automatisierungsgerät abgefragt bzw. erhoben werden. Die Verwendung eines Servers zur Bereitstellung der entsprechenden Daten ist in diesem Fall nicht nötig. Eine zunehmende Flexibilität und eine zunehmende Skalierbarkeit des Gesamtsystems wird auf diese Weise ermöglicht. Die Übertragung der Daten erfolgt in diesem Fall beispielsweise über WebServices wie OPC XML. Neben der Flexibilität und der Skalierbarkeit ist die Reduktion von Kosten bei dieser möglichen, jedoch nicht zwingenden, Ausgestaltung der Erfindung von Vorteil. Kostspielige Anschaffungen von Servern zur Bereitstellung der Information bzw. Daten entfallen bei dieser Variante.

Eine weitere vorteilhafte Ausbildung der Erfindung ist dadurch gekennzeichnet, dass die zweite Vorrichtung zum Empfang der dynamischen Daten als Client, insbesondere als Web-Client, ausgebildet ist, und/oder dass die Mittel zur Visualisierung der dynamischen Daten als Browser ausgebildet sind. Als Client kann hier eine Vielzahl verschiedener Vorrichtungen verwendet werden. Beispielsweise ist der Einsatz von PCs, Workstations aber auch beliebigen mobilen Geräten wie Web-Pads, Palm Pilots oder auch webfähigen Mobiltelefonen möglich. Ein Web-Browser ist hierbei nur eine spezielle Ausprägung. Allgemein kann man hier von Web-Clients sprechen, die in der Lage sind Web Inhalte zu verarbeiten und anzuzeigen.

Die Verwendung eines Web-Clients mit einem Browser zur Visualisierung der anfallenden dynamischen Prozessdaten in Form von Grafiken im Rahmen eines B&B-Systems ist besonders vorteilhaft, da die Datenübertragung auf Basis von Standard-Protokollen erfolgen kann. Bei Nutzung des Intra- bzw. Internet für die Datenübertragung wird zudem eine hohe Flexibilität für den Anwender des B&B-Systems erreicht. Speziell bei Nutzung eines Web-Clients kann der Anwender an beliebigen Orten die Informationen, insbesondere die Prozesswerte, auf seinen Client herunterladen und die Informationen mit Hilfe des Browsers in Form von Web-Seiten visualisieren. Speziell die Verwendung von sogenannten Browsern, Standardanwendungen für die Darstellung von Web-Seiten ist vorteilhaft, da heutzutage eine große Menge von potentiellen Benutzern des Systems sich mit der Art und Weise auskennt, wie ein Standard-Browser zu bedienen ist, wodurch aufwendige Schulungen sich erübrigen. Eine einfache und kostengünstige Anwendung bzw. Nutzung des erfindungsgemäßen Systems wird hierdurch ermöglicht.

Eine weitere vorteilhafte Ausbildung der Erfindung ist dadurch gekennzeichnet, dass die dynamischen Daten für eine von der Bildschirmauflösung und/oder dem Zoomfaktor unabhängigen Darstellung vorgesehen sind. Hierdurch wird es möglich, die Darstellung von Grafiken in B&B-Systemen unabhängig von den Anzeigemöglichkeiten, wie beispielsweise der Bildschirmauflösung von Web-Clients, zu realisieren. Ebenso wird es hierdurch für den Nutzer eines derartigen Systems möglich, verschiedene Grade bezüglich der Detailgenauigkeit der Darstellung der Informationen visualisieren zu lassen. Die automatische Skalierbarkeit der Darstellung der Informationen gewährleistet somit eine Anpassung an beliebige Anwendungen und Clients.

Eine weitere vorteilhafte Ausbildung des Systems ist dadurch gekennzeichnet, dass als Sprache für die Erstellung der skalierbaren Vektorgrafiken SVG, **S**calable **V**ector **G**raphics, vorgesehen ist. Bei SVG handelt es sich um eine Recommendation des W3C bzw. um einen Standard für skalierbare Vektorgrafiken. SVG ist eine Sprache zur Beschreibung von Darstellung und Animation von Grafiken auf Web-Seiten. SVG wurde speziell für das Web entwickelt und ist XML-basiert. SVG läuft auch unter dem Schlagwort "HTML für Grafiken". Die Vorteile von SVG sind u.a., dass es sich um eine plattformunabhängige und austauschbare Beschreibungssprache für Grafiken handelt. Derartige Grafiken können also auf beliebigen Systemen, beispielsweise beliebigen Web-Clients angezeigt werden, ohne dass weitere Installationen von entsprechenden Komponenten erforderlich sind. SVG unterstützt durch höherwertige Funktionen die Erstellung von komplexen Grafiken. Beispielsweise ist eine Erstellung von Bézierkurven oder Kurvenzügen möglich. Daneben ermöglicht SVG die Erstellung von Bibliotheken von Grafikkomponenten und deren mehrfache Verwendung bei der Erstellung von Grafiken. Außerdem ist eine Erstellung von dynamischen Grafiken durch die Möglichkeit der Interaktion mit der Grafik, beispielsweise durch Mausklick, oder durch die Definition von Animationspfaden möglich. Die Verwendung von SVG im Rahmen des erfindungsgemäßen Systems ermöglicht somit eine verbesserte Erstellung von Grafiken, was zu einer besseren Darstellung der Informationen für den Endanwender führt. Dies wiederum hat eine Verbesserung des gesamten B&B-Systems zur Folge, da durch eine bessere Visualisierung der relevanten Information eine höhere Bediensicherheit erreicht wird.

Eine weitere vorteilhafte Ausbildung der Erfindung ist dadurch gekennzeichnet, dass die erste Vorrichtung zur Bereitstellung der dynamischen Daten in Form von WebServices vorgesehen ist. Die bereitgestellten WebServices können aus beliebigen Clients, insbesondere aus Web-Browsern heraus aufgerufen werden. Damit ist der Grundstein für ein Web-basiertes B&B-System gelegt. Der Vorteil liegt darin, dass nur auf das Web-Paradigma und seine Standards gesetzt wird. Eine weitere, plattformgebundene Technik, wie beispielsweise ActiveX-Controls entfällt. Ebenso werden Speziallösungen überflüssig, bei denen beispielsweise ein "unendlicher Download" implementiert werden muss. Die Daten stehen vielmehr zum Abruf dauerhaft bereit und können von den Browsern selbsttätig aufgerufen werden. Bei den von Servern und/oder Automatisierungseinrichtungen angebotenen WebServices handelt es sich um standardisierte Web-Technologie. Die Verwendung dieses Standards im Rahmen des vorgeschlagenen erfindungsgemäßen Systems führt zu einer Kostenersparnis und erleichtert die Anwendung des Systems.

Eine weitere vorteilhafte Ausbildung der Erfindung ist dadurch gekennzeichnet, dass die von der ersten Vorrichtung in Form von WebServices bereitgestellten Daten zum Aufruf und/oder Abruf durch die Mittel zur Visualisierung vorgesehen sind. Im Rahmen des Systems werden die Prozesswerte, bzw. die dynamischen Daten, die geändert worden sind und nach ihrer Änderung neu visualisiert werden sollen, somit vom Client selbst aus aufgerufen. Hierbei wird ein sogenanntes Pull-Prinzip verwendet, bei dem die Daten dann abgerufen werden, wenn der Client sie verarbeiten kann. Dies führt zu geringerer Netzlast und bedarfsorientierter Datenübermittlung.

Vorteilhaft ist hierbei außerdem, dass die anzuzeigende B&B Oberfläche (WebSeite) nicht von einem Server kommen muss, sondern lokal auf dem Client oder in der Client Applikation vorliegt und mit Daten aus dem Prozess, über einen WebService, gefüllt wird. In diesem Fall ist allerdings der Web-Client kein einfacher Standard-Web-Browser, sondern eine Applikation, die sich der Web-Technologie bedient.

Eine Aktualisierung der Informationen bzw. Daten derart, dass sie nur abgeholt werden müssen, wenn sie sich geändert haben, ist möglich und eine detaillierte Beschreibung der Vorgehensweise findet sich in der beim DPMA eingereichten Anmeldung, die unter dem Aktenzeichen 102 42 918.9-53 geführt wird.

Das vorgestellte System, ist zudem vor allem durch die Möglichkeit der Verwendung von Standardtechniken zur Implementierung vorteilhaft. Auf den meisten Browsern ist Clientseitig ein Scripting (z.B. ECMA-Script) vorhanden, wobei es sich um eine standardisierte Sprache zum Einsatz in Web-Browsern handelt.

Hierdurch wird im Browser auf dem Client die Möglichkeit gegeben, nur solche Daten zu aktualisieren, die sich verändert haben. Ein ereignisgesteuertes Vorgehen, wie es bei B&B-Systemen erwünscht ist, wird damit auch im Web-Umfeld realisierbar. Dies führt zu einfacherer Bedienbarkeit und ermöglicht eine größere Verbreitung der B&B-Systeme im Rahmen des Automatisierungsumfelds.

Eine weitere vorteilhafte Ausbildung des Systems ist dadurch gekennzeichnet, dass die erste Vorrichtung zur Bereitstellung der aktualisierten dynamischen Daten mittels Hidden Frames vorgesehen ist. Hierbei werden die Informationen bzw. Prozesswerte beispielsweise auf einem Web-Server in der aktuellen Form gespeichert und auf einer nicht sichtbaren Web-Seite "angezeigt".

Ein weiterer Vorteil der Realisierung von B&B Systemen auf Basis des vorgeschlagenen Systems ist, dass jede grafische Darstellung der Prozesswerte auf dem Web-Server sich erübrigt. Die Darstellung der entsprechenden Informationen bzw. Werte erfolgt erst nach Abruf, beispielsweise durch einen Browser, der unter Umständen spezielle Style Sheets verwendet und die Daten dann in der dort gewünschten Form anzeigt. Die Daten auf dem Server/Automatisierungskomponente können in darstellungsunabhängiger Form abgelegt werden. Die Daten werden in die grafische Form dann erst auf dem Client gebracht. Dies gibt die Möglichkeit, die Daten in unterschiedlicher Weise auf verschiedenen Clients für unterschiedliche Benutzer darzustellen. Ein Benutzer eines B&B-Systems kann beispielsweise seine Web-Seite selbst zusammenstellen und die dazustellenden Prozesswerte als Grunddaten vom Server abrufen. In der Darstellungsform ist der Benutzer dann frei. Durch diese vorteilhafte Ausbildung wird eine höchstmögliche Flexibilität und Anpassung des B&B-Systems an die Bedürfnisse der Benutzer erreicht, was zu einer individuell zugeschnittenen Informationsbereitstellung führt.

Eine weitere vorteilhafte Ausbildung der Erfindung ist dadurch gekennzeichnet, dass die erste Vorrichtung zur Übertragung der aktualisierten dynamischen Daten über einen Streaming Media Mechanismus auf die zweite Vorrichtung vorgesehen ist. Hierbei schickt der Server ständig aktualisierte Werte zum Client. Der Client hält dabei eine Verbindung zum Server offen. Die Daten werden entsprechend eines Push-Models vom Server zum Client übertragen. Die Verwendung dieser möglichen, jedoch nicht ausschließlichen, Anwendung der Erfindung ist vorteilhaft, wenn ohnehin viele Daten sich in einem kurzen Zeitraum ändern und ein ständiger Abgleich der Aktualität der Daten nicht Not tut. In diesem Fall ist die Verwendung des Push-Models für die Datenübertragung eine effiziente und einfache Ausführungsform.

Eine weitere vorteilhafte Ausbildung der Erfindung ist dadurch gekennzeichnet, dass die zweite Vorrichtung zur drahtlosen Kommunikation über die Übertragungsvorrichtung vorgesehen ist. Dies ermöglicht es, einem Benutzer, den Bildschirm bzw. Client auf dem die Grafiken, welche die Informationen darstellen, angezeigt werden, an beliebiger Stelle zu verwenden. Die Übertragung der Daten wird in dieser vorteilhaften Ausbildungsform beispielsweise über ein WLAN oder Funk realisiert. Dem Anwender eines B&B-Systems wird dadurch größtmögliche Bewegungsfreiheit bei seiner Arbeit gegeben.

Im folgenden wird die Erfindung anhand der in den Figuren dargestellten Ausführungsbeispiele näher beschrieben und erläutert. Es zeigen:
- FIG 1: eine schematische Darstellung einer Webbasierten Anzeige von Informationen,
- FIG 2: eine beispielhafte grafische Darstellung von dynamischen Prozesswerten in einem B&B-System,
- FIG 3: ein Programmablaufdiagramm mit der beispielhaften Beschreibung einer skalierbaren Vektorgrafik,
- FIG 4, 5, 6: Programmablaufdiagramme, die die Verbindung von Grafik und Prozesswerten darstellen.

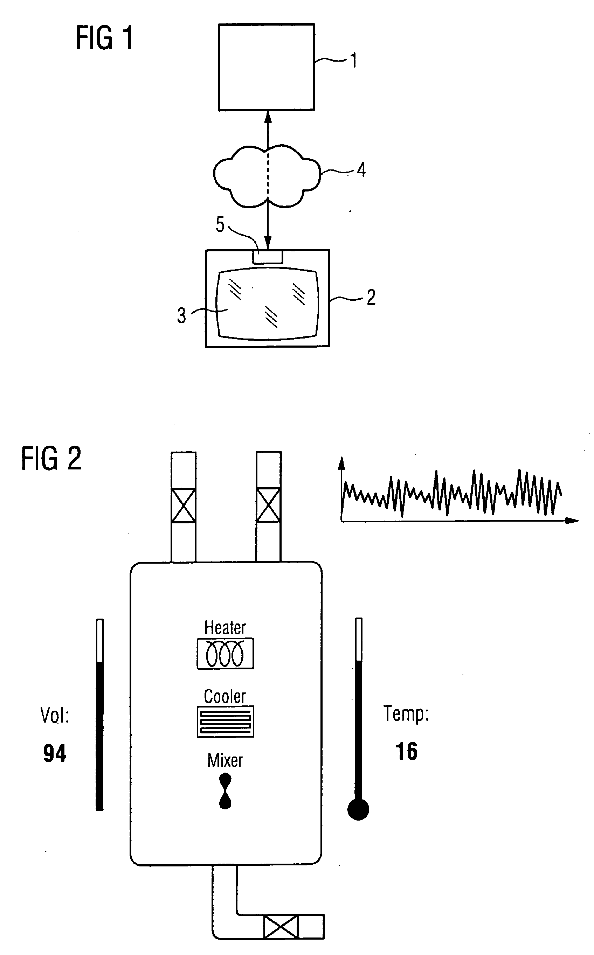

FIG 1 zeigt eine schematische Abbildung des Systems zur Darstellung von Informationen bzw. von dynamischen Daten. Hierbei werden Daten von einer ersten Vorrichtung 1 bereitgestellt. Bei dieser ersten Vorrichtung 1 kann es sich beispielsweise um einen Server 1a, insbesondere einen Web-Server, handeln. Die Daten können jedoch in einer weiteren Ausführungsform von einem Automatisierungsgerät 1b, beispielsweise einem Mixer oder einem Heizer (bzw. deren Steuerungsgerät), bereitgestellt werden. Die Daten werden über die Datenübertragungsvorrichtung 4 an eine zweite Vorrichtung 2 übertragen. Bei der zweiten Vorrichtung 2 kann es sich um einen Client, beispielsweise einem Web-Client, handeln. Dieser Client kann als sogenannter Thin-Client ausgebildet sein und ggf. drahtlos über ein WLAN mit der ersten Vorrichtung 1 kommunizieren. Bei der Übertragungsvorrichtung 4 kann es sich um ein dezentrales Netzwerk, wie beispielsweise das Inter- oder Intranet handeln. Die dynamischen Daten werden auf der zweiten Vorrichtung 2 durch Mittel 3 zum Visualisieren darstellt. Bei den Mitteln 3 zum Visualisieren kann es sich um einen Standard-Web-Browser handeln. Um die Daten zu empfangen, besitzt der Client eine Empfangsvorrichtung 5. Die Daten werden auf dem Client im Browser mittels sogenannter skalierbarer Vektorgrafiken, speziell der Scalable Vector Graphics-Technologie dargestellt.

Im Folgenden wird das prinzipielle Vorgehen bei Verwendung des in Fig 1 dargestellten Systems am Beispiel eines Client-Server Systems geschildert. Eine Verwendung anderer Ausführungsformen der ersten Vorrichtung 1, die im Beispiel durch einen Server repräsentiert ist, ist jedoch auch denkbar. Bei der ersten Vorrichtung kann es sich beispielsweise um ein Automatisierungsgerät oder um jede beliebige Vorrichtung handeln, an der dynamische Daten anfallen und die sie auch bereitstellt.
1. Ein Server bietet über WebServices (standardisierte Web-Technologie) die Prozesswerte eines Automatisierungs- oder Produktionsprozesses an.
2. Der Client fordert vom Web-Server eine Web-Seite an.
   - Die Web-Seite bzw. deren Aufbau kann fest vorgegeben sein (z.B. durch den Projekteur) und enthält grafische Darstellungen und Repräsentationen von Prozesswerten.
   - Die Web-Seite kann auch vom Benutzer selbst zusammengestellt worden sein, indem er beispielsweise über ein Portal die darzustellenden Prozesswerte und ihre Darstellungsform ausgewählt hat.
   - Die Web-Seite enthält Informationen darüber, welche Prozesswerte in der Web-Seite angezeigt werden sollen. Dies kann z.B. vorteilhaft in Form eines XML-Data-Islands erfolgen, oder auch nur temporär zum Setzen von Variablen und Attributen verwendet werden.
   - Darüber hinaus enthält die Seite auch Verweise auf SVG-Dateien, die grafische Darstellungen und Animationen beschreiben. Sie können beispielsweise als Grafikbibliothek bereitgestellt werden, die Standard-Elemente wie Zeigerinstrumente, Balkendiagramme, Wertanzeigen etc. enthält.
   - Ein "Glue-Code" verbindet die Abfrage von Prozesswerten und Ansteuerung der Grafik um entsprechende Animation /Visualisierung der Prozesswerte durchzuführen. Dieser Code wird in der Seite hinterlegt. Der Client-Side Script-Code (z.B. ECMAScript) "verdrahtet" die vom Server erhaltenen Werte und die SVG-Grafikelemente, die dargestellt werden.
3. Der Client erhält im Web-Browser die anzuzeigenden (Prozess-)Werte vom Server, die er in grafischer Form und/oder textuell darstellt. Dabei sind verschiedene Mechanismen für den Datentransport zum Client möglich. Diese sind unterschiedlich sinnvoll.
   - Ein Client kann beispielsweise direkt eine Seite (z.B. eines Hidden Frames) aktualisieren (pollen) und damit die Daten für die Anzeige ermitteln.
   - Ein Client kann sich auch eines WebService bedienen, um die Daten direkt abzufragen (z.B. mit WebService Client-Behaviors innerhalb des Internet Explorers) und so die Daten direkt pollen. Eine Variante davon ist die Nutzung eines WebService der Auskunft geben kann ob geänderte Werte vorliegen und diese erst bei Bedarf abruft. Dies optimiert den Zugriff und benutzte Bandbreite.
   - Eine weitere Alternative ist die Daten über ein Streaming Media Mechanismus zu erhalten. Im Gegensatz zu den vorherigen Lösungen entspricht dies einem Push-Model, da hier der Server ständig aktualisierte Werte zum Client schickt. Der Client hält eine Verbindung zum Server offen.
4. Durch die Kombination von Standard Web-Seite mit SVG Darstellungselemente, Abruf von Aktualdaten vom Server und Client-Side Script-Code zur Verschaltung von SVG Elementen und Daten ist es möglich, den Anforderungen einer B&B Oberfläche auch im Web-Umfeld gerecht zu werden. Dabei sind die zugrundeliegenden Techniken alle standardisierte Web-Techniken.
5. Die Bedienung erfolgt "konventionell" über die Techniken des Webs, wie beispielsweise das Einblenden von Buttons, selektiven Stellen in der Grafik, Eingabefelder etc. Diese Ereignisse und Daten können dann wieder zum Server zurückgeschickt werden, um dort Steuerungsfunktionalität auszulösen oder auch nur zwischen Web-Seiten / B&B Bildern umzuschalten.

Das in FIG 1 dargestellte System bietet folgende Vorteile:
- Die Möglichkeit einer roundtripfreien grafischen Darstellung von Prozesswerten ist gegeben (nicht die gesamte Web-Seite muss angefordert werden, sondern nur die Aktualdaten wenn sich diese geändert haben). Text und Inhalte von übertragenen Web-Seiten bleiben erhalten und können auf Client-Seite interpretiert werden.
- Eine nahtlose Integration in der XML Welt ist gegeben: Vermeidung eines darstellerischen und technischen "Bruches", wie er mit ActiveX Controls oder Java Applets zwangsweise erfolgen würde.
- Die Nutzung der Leistungsfähigkeit von SVG zur Repräsentation/Generierung von dynamischen Grafiken ist möglich.
- Die Leistungsfähigkeit von Standard-Kommunikation über WebService Technik wird verwendet. Hierdurch ist keine Nachimplementierung einer Kommunikation in ActiveX Controls oder Java Applets nötig.
- Vorteilhaft ist die Skalierbarkeit der Server-Applikation durch Zustandslosigkeit. Es ist keine dauerhafte Verbindung zum Server notwendig.
- Das System ist uneingeschränkt firewall-fähig.
- Eine einfache Verwendung ist gegeben und das System basiert ausschließlich auf Standard Web-Technologien.
- Ein hohes Maß an Sicherheit durch Vermeidung sicherheitskritischer Techniken ist gegeben.
- Neben einem SVG Viewer, der einmalig auf dem Client installiert werden muss, (und der in den nächsten Versionen der Browser ohnehin fester Bestandteil sein wird) ist keine weitere Installation auf der Client-Seite nötig.
- Die notwendige Bandbreite zwischen Client und Server ist relativ gering.
- Die Erstellung von SVG Grafiken und Seiten ist durch eine Toollandschaft an Grafikprogrammen unterstützt.
- Ein WebService Zugang auf die Daten ist zukünftig ohnehin bereits vorhanden (z.B. über OPC XML). Dessen Existenz kann hier genutzt werden.
- Als Vektorgrafik ist SVG frei skalierbar, d.h. automatische Anpassung an Bildschirmgrößen ist einfach möglich.
- Die Möglichkeit der Verwendung von (SVG) Grafik-Bibliotheken auch bei Erstellung von Web-Seiten ist gegeben.
- Die nahtlose Integration der SVG Elemente in die umgebende HTML-Seite sorgt für eine Durchgängigkeit in der Darstellung, insbesondere auch durch die gemeinsame Nutzbarkeit von Casacading Style Sheets (W3C-gernormt).
- Die Kombination mit anderen Web-Technologien ist möglich (gemischte Seiten mit HTML Text, Bitmaps, Video, etc.)
- Eine Verbindung zu mehreren Servern, die Prozesswerte liefern ist einfach realisierbar.
- Eine einfache (nachträgliche) Erweiterbarkeit einer Grafik um weitere Visualisierung von Prozesswerten ist möglich.

FIG 2 zeigt eine mit SVG (Scalable Vector Graphics) erstellte Grafik. Sie enthält Visualisierungen von verschiedenen Automatisierungskomponenten. So werden Prozesswerte direkt in Textform visualisiert und auch durch zusätzliche grafische Elemente, die in Abhängigkeit von den Prozesswerten ihre Farbe/Form/Füllungsgrad ändern. Über statische Bilder hinaus, die beispielsweise die dargestellten Ventile nur fest darstellen können, ist es mit SVG möglich auch deren Zustand zu animieren und ihre Position entsprechend darzustellen. Die gelb hinterlegte Verlaufskurve zeigt den zeitlichen Verlauf eines Prozesswerts. Die gesamte Darstellung des Bildes erfolgt in einem Standard Web-Browser und ist rein XML/HTML basiert. Die aktuellen Prozesswerte werden über WebService Behavior direkt von einem WebService geholt. Scripting Code setzt die Prozesswerte als Attribute der SVG Elemente der Grafik. Technisch erfolgt dies durch Aufbau einer DOM (Document Object Model) über dem SVG Bild, das durch XML repräsentiert wird und Setzen von Attributen bei Elementen des Baums.

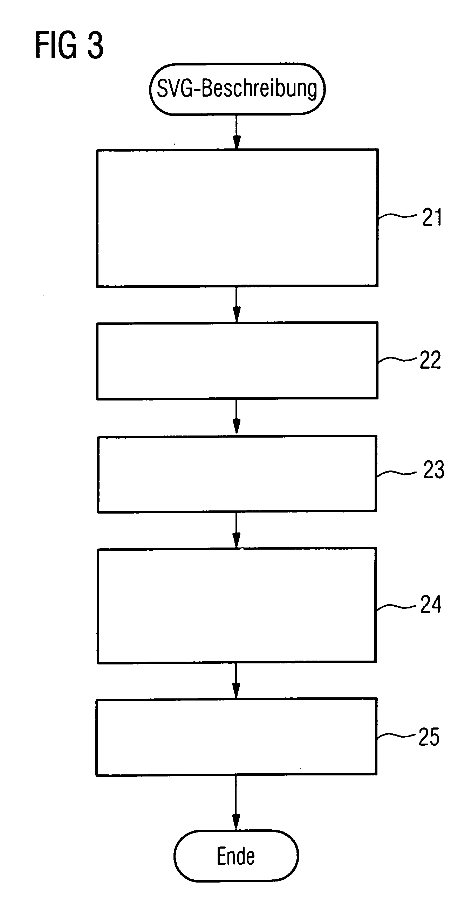

FIG 3 zeigt ein Ablaufdiagramm für die Beschreibung einer beispielhaften Grafik. Die folgende XML-Sequenz stellt die SVG-Beschreibung der in FIG 2 gezeigten Grafik dar. Diese wird für die Beschreibung von wieder verwendbaren Library-Elementen, zur deklarativen Erstellung der Grafik und deren Animations-Bestandteilen verwendet.

Aktion 21: Anlegen eines SVG-Element und Festlegen, welche JavaScript-Funktion (initVars(evt)) beim Laden des SVG-Elementes aufgerufen wird

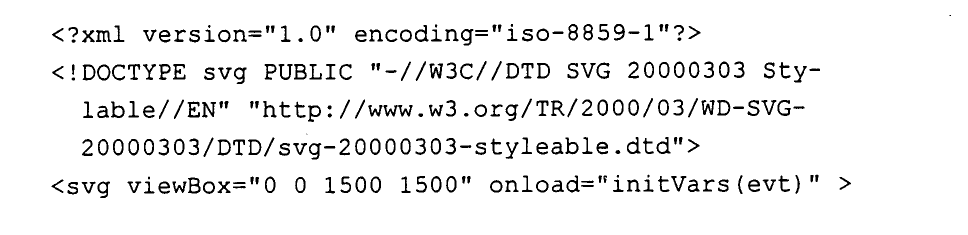

Aktion 22: Definition der Farbverläufe für die Thermometeranzeige

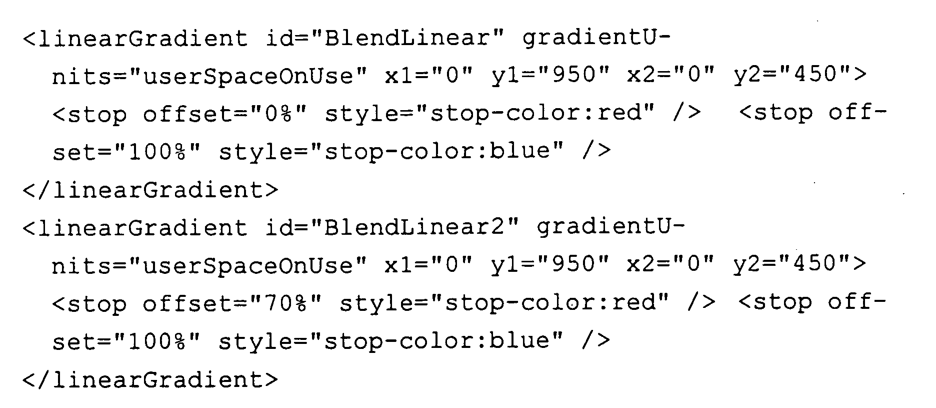

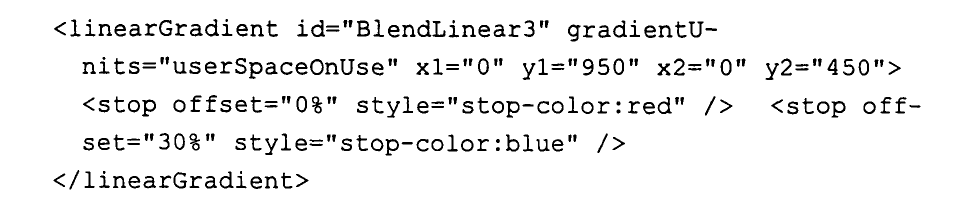

Aktion 23: Definition weiterer Grafiktemplates wie z.B. Ventile, Heizschlange für spätere Zeichenoperationen

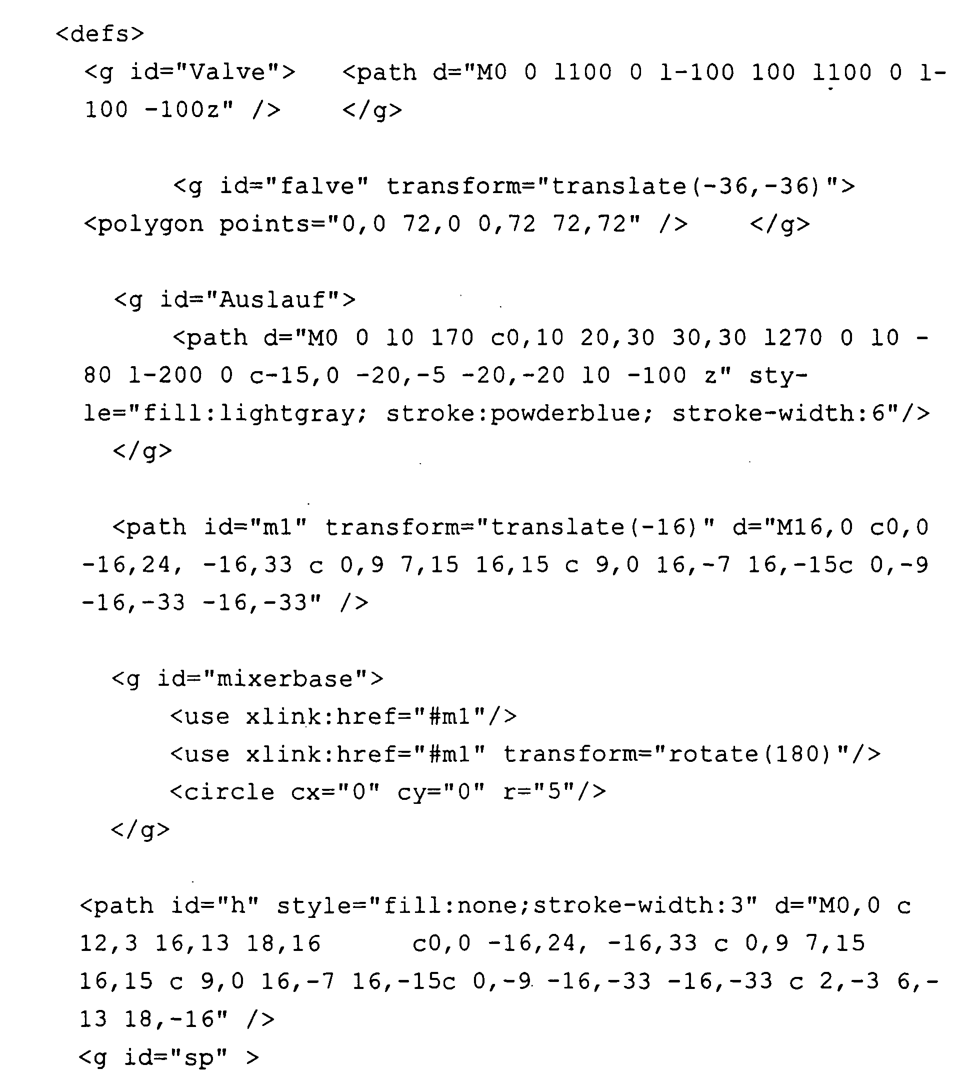

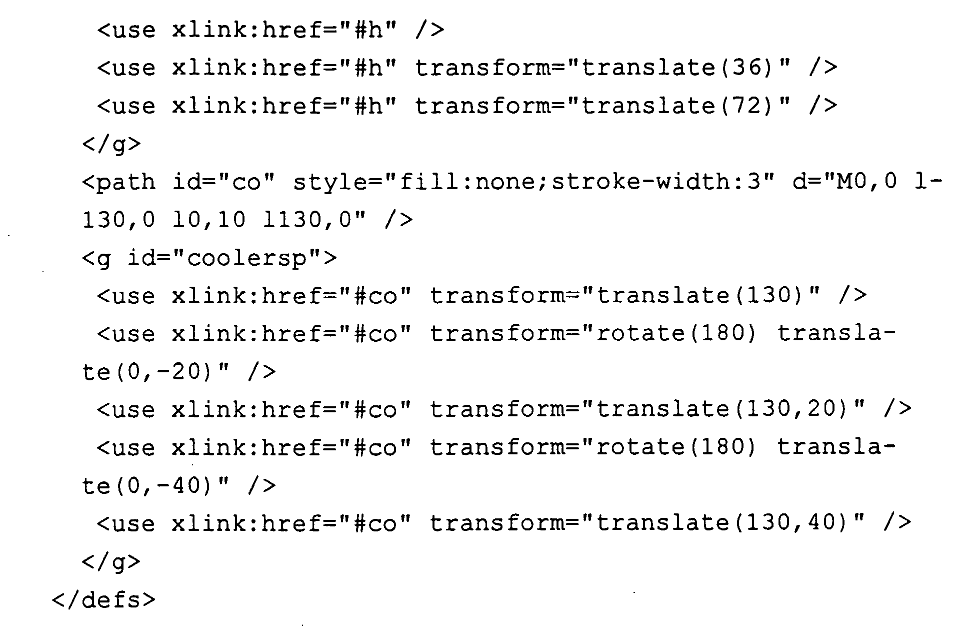

Aktion 24: Zeichnen der Darstellungsobjekte (Kessel, Ein-, Ausläufe, Füllstandsanzeige, Texte,...) entweder direkt oder unter Verwendung der vorgefertigten Templates

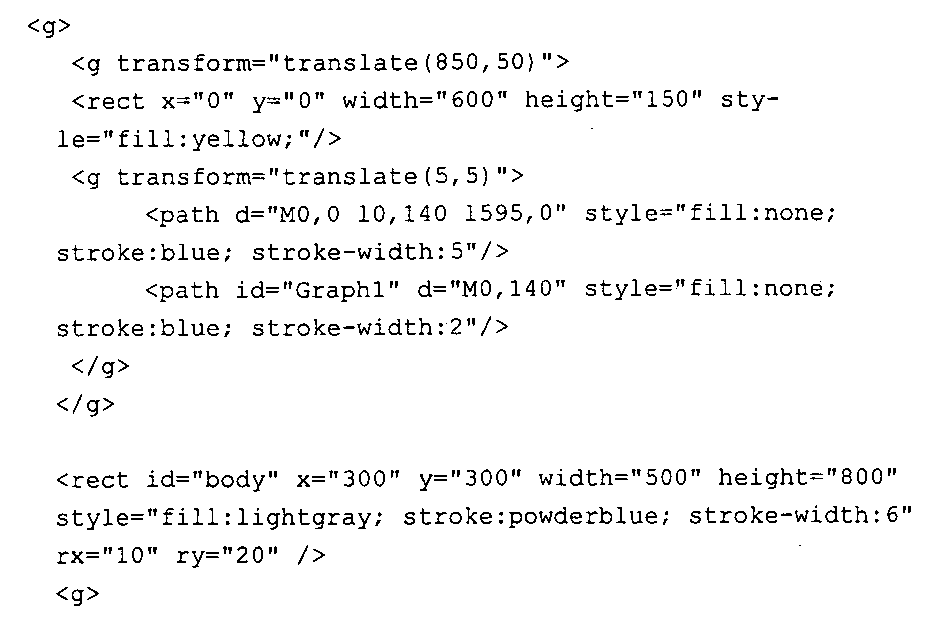

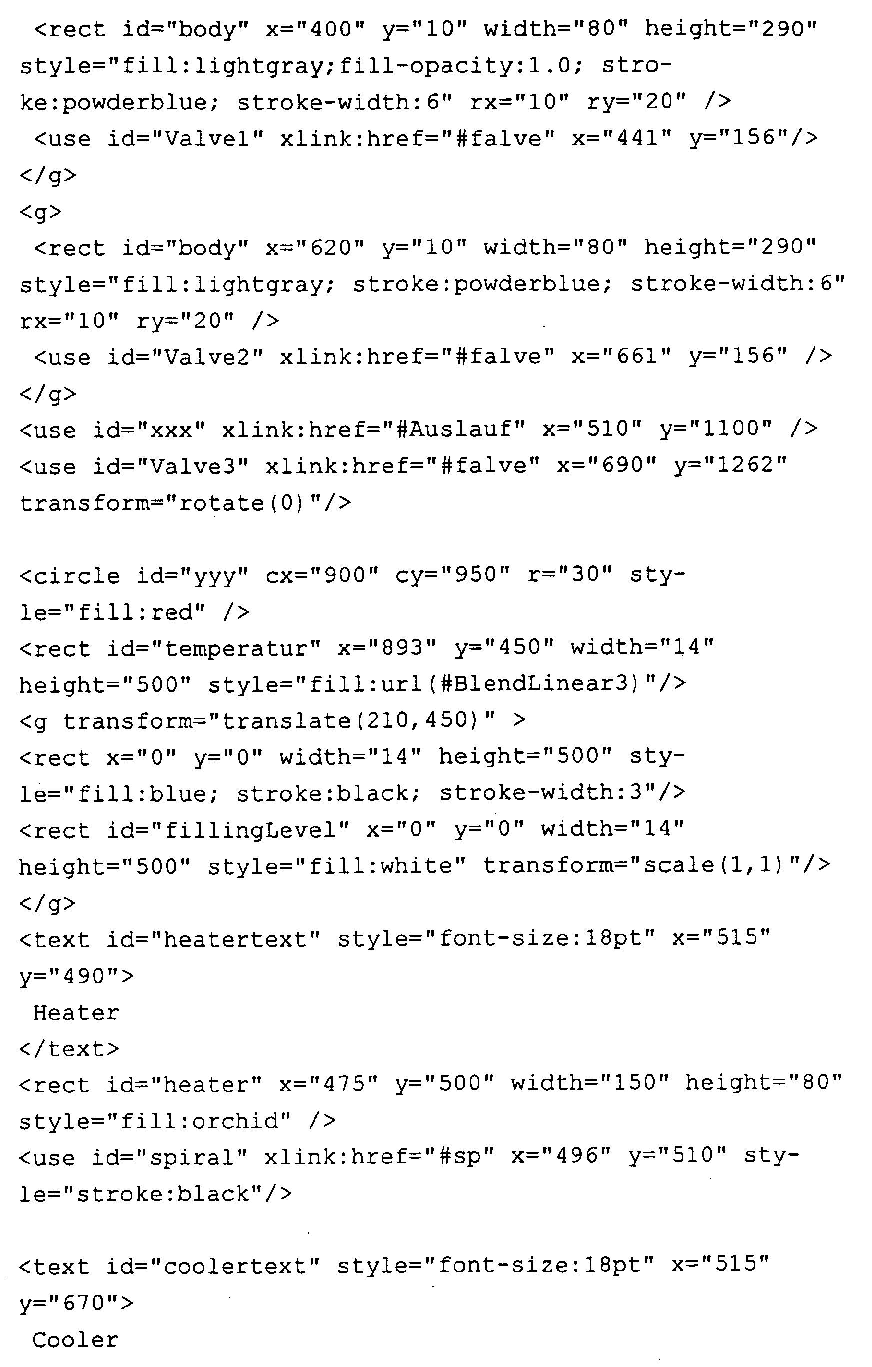

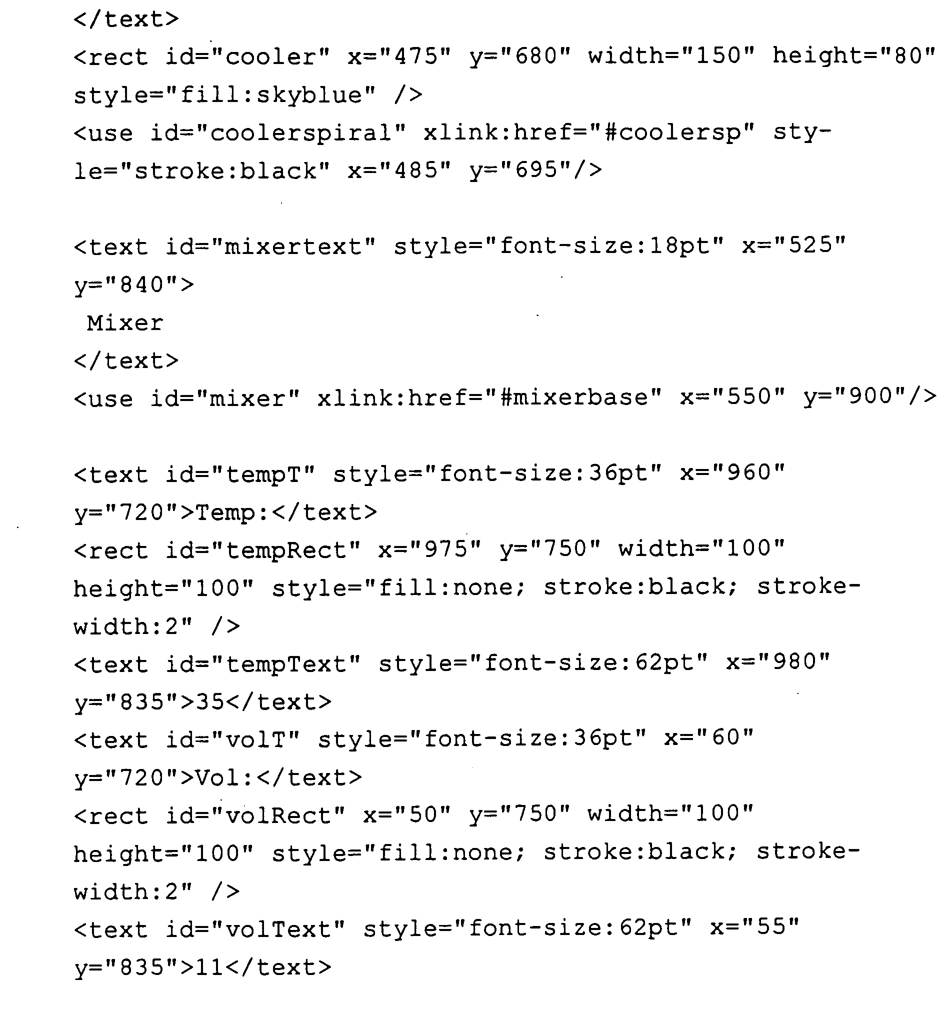

Aktion 25: Animationssektion, Festlegen der Objekte, die über Zeitereignisse oder andere Ereignisse animiert werden

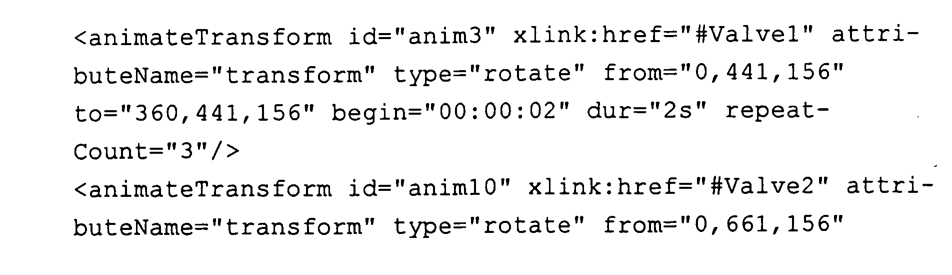

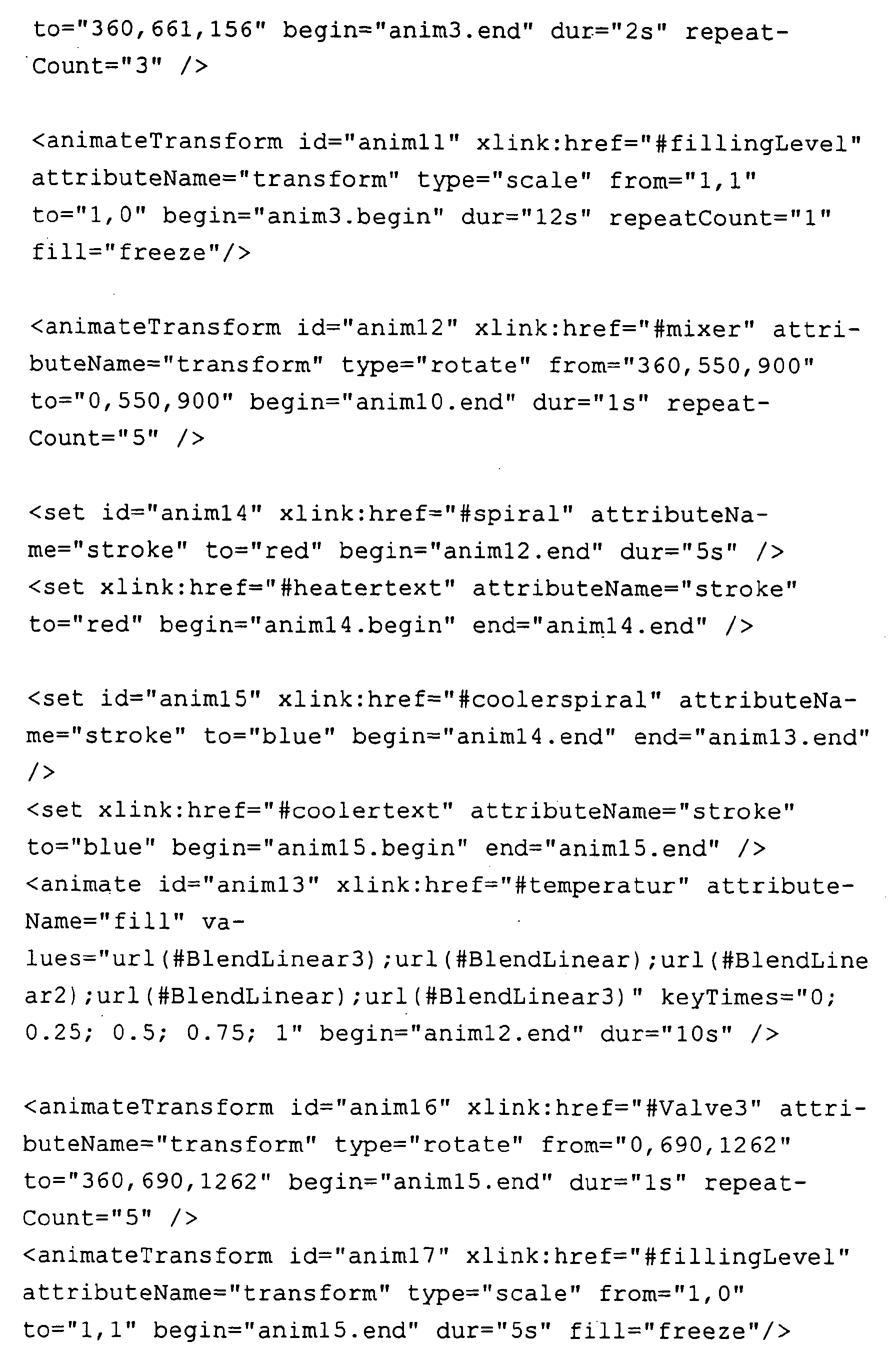

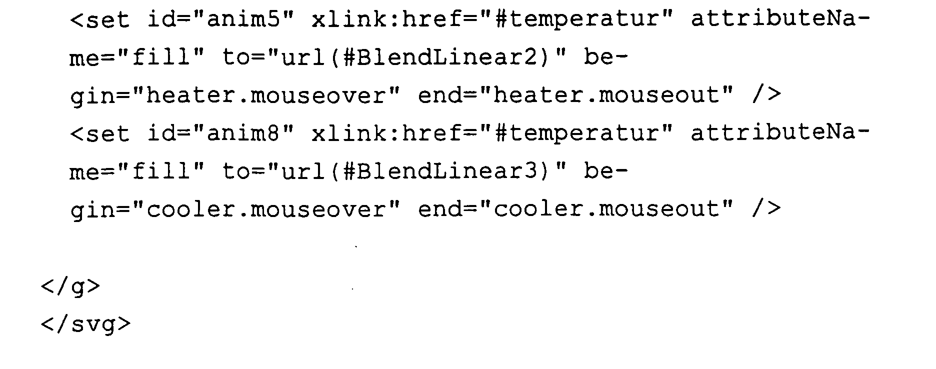

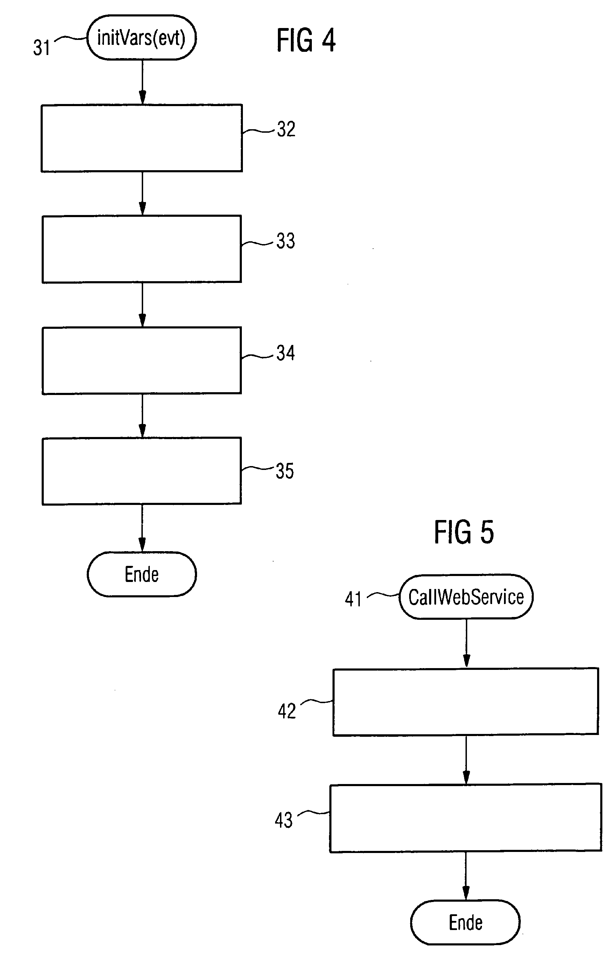

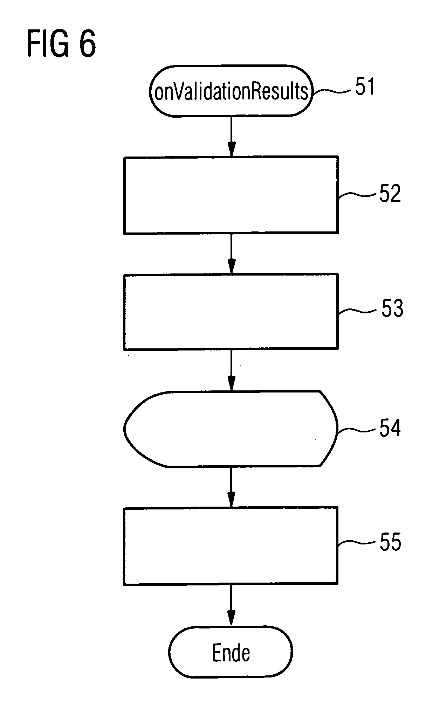

Die Verbindung von Grafik mit den Prozesswerten erfolgt wie in den Figuren 4, 5 und 6 dargestellt durch einfaches Scripting wie in folgenden Codeausschnitten gezeigt. Dieser Teil repräsentiert/realisiert die eigentliche B&B Funktionalität. Dieses Script wird im Browser auf dem Client ausgeführt. Es nutzt einen WebService, über den auf die Prozesswerte zugegriffen wird und aktualisiert die Werte in den entsprechenden Grafikelementen.

### FIG 4:

Anfang 31: Initialisierungsroutine beim Laden des SVG-Elements in den Browser

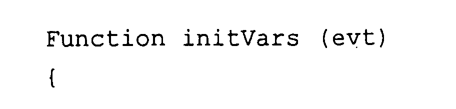

Aktion 32: Setzen der globalen Variable für Zugriff auf das SVG Dokument (= Grafik)

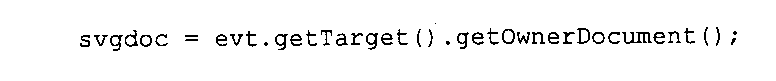

Aktion 33: Initialisierung des WebService Behavior, der Zugriff auf die Prozesswerte ermöglicht

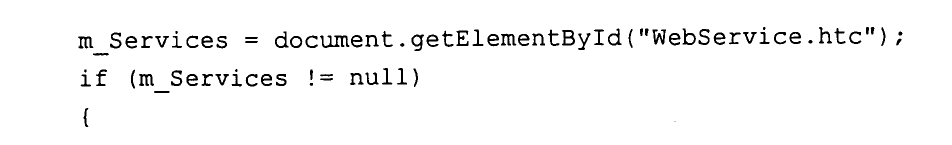

Aktion 34: Initialisierung des "DataProvider" als Stellvertreter für den WebService zum Lesen von Prozesswerten; Speichern der Zugriffspunkte für die zu verwendenden Webservices

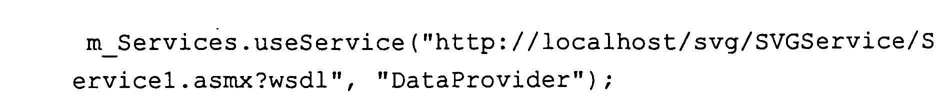

Aktion 35: Aufruf des WebServices

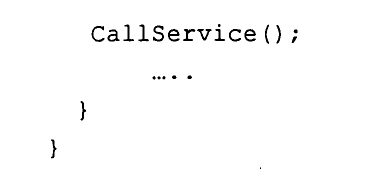

### FIG 5:

Anfang 41: Aufruf der Funktion

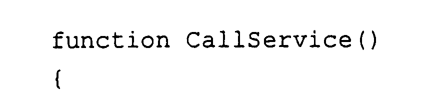

Aktion 42: Aufruf des WebService zur Ermittlung des aktuellen Wertes der Temperaturanzeige

Aktion 43: Die Resultate des Aufrufs werden in der Callback-Funktion onValidationResults abgearbeitet

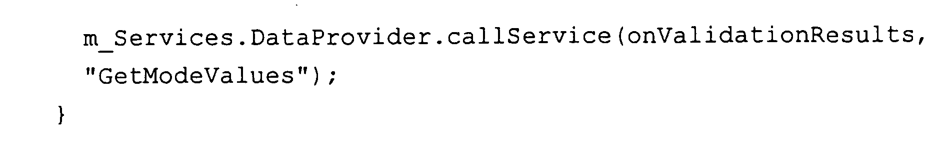

### FIG 6:

Anfang 51: Callbackfunktion

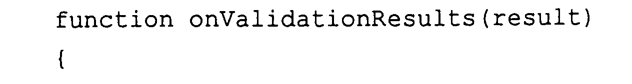

Aktion 52: WebService-Ergebnisse (Temperatur, etc.) ermitteln var i;

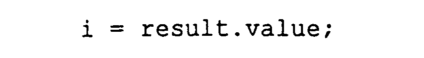

Aktion 53: Ermittlung des grafischen Elements innerhalb des SVG Documents (DOM), dessen Wert, Aussehen, etc. verändert werden soll

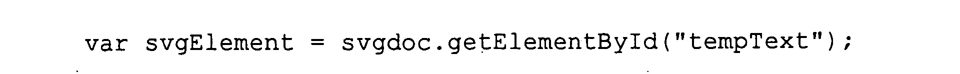

Aktion 54: Änderungsaufruf an das Element (Aktualisierung der Grafik erfolgt durch SVG Viewer automatisch)

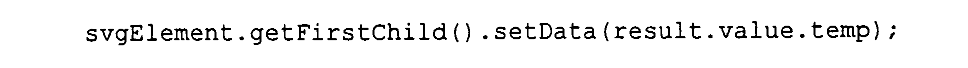

Aktion 55: Vorbereitung für die Abholung der nächsten Aktualwerte (hier zeitgesteuert) durch erneuten Aufruf der Javascriptfunktion CallService welche wiederum die benötigten WebServices initiiert.

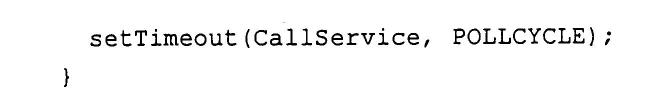

Neben dieser zeitgesteuerten Vorgehensweise zum Lesen von Prozesswerten über den WebService, sind andere Mechanismen möglich. So ist es sinnvoll, durch einen kleinen, kurzen und damit sehr schnellen Aufruf eines WebServices festzustellen, ob sich irgendwelche Prozesswerte geändert haben. Erst dann werden die Prozesswerte zurückgeliefert (im gleichen Aufruf oder in einem zweiten Aufruf) und mit den aktualisierten Werten die Grafik ggf. modifiziert.

Zusammenfassend betrifft die Erfindung ein System, ein Verfahren sowie einen Client und eine Datenverarbeitungsvorrichtung zur Web-basierten Darstellung von Daten in einem System zum Bedienen und Beobachten eines Prozesses. Aktuelle Prozesswerte werden automatisch von einem Server oder einem Automatisierungsgerät 1 an einen Client 2 übertragen, auf dem sie mittels skalierbarer Vektorgrafiken und der Anwendung von SVG (Scalable Vector Graphics) visualisiert werden.

## Patentansprüche

1. System zur Darstellung und/oder Anzeige von dynamischen Daten zum Bedienen und Beobachten eines Prozesses, insbesondere von Prozessdaten eines Fertigungs- und/oder Herstellungsprozesses im Automatisierungsumfeld, mit
- mindestens einer ersten Vorrichtung (1) zur Bereitstellung der dynamischen Daten,
- mindestens einer zweiten Vorrichtung (2) zum Empfang der dynamischen Daten, wobei die zweite Vorrichtung (2) Mittel (3) zur Visualisierung der dynamischen Daten aufweist,
- einer Übertragungsvorrichtung (4) zur Kommunikation der ersten Vorrichtung (1) mit der zweiten Vorrichtung (2),
wobei die von der ersten Vorrichtung (1) bereitgestellten dynamischen Daten zur automatischen Übertragung zwischen der ersten Vorrichtung (1) und den Mitteln (3) zur Visualisierung vorgesehen sind und
wobei die Visualisierung der dynamischen Daten mittels skalierbarer Vektorgrafiken vorgesehen ist.

2. System nach Anspruch 1,
**dadurch gekennzeichnet,**
**dass** die Übertragungsvorrichtung (4) als Intranet und/oder Internet ausgebildet ist.

3. System nach einem der Ansprüche 1 oder 2,
**dadurch gekennzeichnet,**
**dass** die erste Vorrichtung (1) zur Bereitstellung der dynamischen Daten als Server (1a), insbesondere als Web-Server, ausgebildet ist.

4. System nach einem der Ansprüche 1 oder 2,
**dadurch gekennzeichnet,**
**dass** die erste Vorrichtung (1) zur Bereitstellung der dynamischen Daten als Automatisierungsgerät mit Web-Server-Funktionalität (1b) ausgebildet ist.

5. System nach einem der Ansprüche 1 bis 4,
**dadurch gekennzeichnet,**
**dass** die zweite Vorrichtung (2) zum Empfang der dynamischen Daten als Client, insbesondere als Web-Client, ausgebildet ist und/oder dass die Mittel (3) zur Visualisierung der dynamischen Daten als Browser ausgebildet sind.

6. System nach einem der Ansprüche 1 bis 5,
**dadurch gekennzeichnet,**
**dass** die dynamischen Daten für eine von der Bildschirmauflösung und/oder dem Zoomfaktor unabhängigen Darstellung vorgesehen sind.

7. System nach einem der Ansprüche 1 bis 6,
**dadurch gekennzeichnet,**
**dass** als Sprache für die Erstellung der skalierbaren Vektorgrafiken SVG, Scalable Vector Graphics, vorgesehen ist.

8. System nach einem der Ansprüche 1 bis 7,
**dadurch gekennzeichnet,**
**dass** die erste Vorrichtung (1) zur Bereitstellung der dynamischen Daten in Form von WebServices vorgesehen ist.

9. System nach einem der Ansprüche 1 bis 8,
**dadurch gekennzeichnet,**
**dass** die von der ersten Vorrichtung (1) in Form von WebServices bereitgestellten Daten zum Aufruf und/oder Abruf durch die Mittel (3) zur Visualisierung vorgesehen sind.

10. System nach einem der Ansprüche 1 bis 8,
**dadurch gekennzeichnet,**
**dass** die erste Vorrichtung (1) zur Bereitstellung der aktualisierten dynamischen Daten mittels Hidden Frames vorgesehen ist.

11. System nach einem der Ansprüche 1 bis 7,
**dadurch gekennzeichnet,**
**dass** die erste Vorrichtung (1) zur Übertragung der aktualisierten dynamischen Daten über einen Streaming Media Mechanismus auf die zweite Vorrichtung (2) vorgesehen ist.

12. System nach einem der Ansprüche 1 bis 11,
**dadurch gekennzeichnet,**
**dass** die zweite Vorrichtung (2) zur drahtlosen Kommunikation über die Übertragungsvorrichtung (4) vorgesehen ist.

13. Verfahren zur Darstellung und/oder Anzeige von dynamischen Daten zum Bedienen und Beobachten eines Prozesses, insbesondere von Prozessdaten eines Fertigungs- und/oder Herstellungsprozesses im Automatisierungsumfeld, bei dem
- mindestens eine ersten Vorrichtung (1) dynamische Daten bereitstellt,
- mindestens eine zweite Vorrichtung (2) dynamische Daten empfängt, wobei die zweite Vorrichtung (2) die Daten visualisiert,
- die erste Vorrichtung (1) mit der zweiten Vorrichtung (2) über eine Übertragungsvorrichtung (4) kommuniziert,
wobei die von der ersten Vorrichtung (1) bereitgestellten dynamischen Daten automatisch auf die auf der zweiten Vorrichtung vorhandenen Mittel (3) zur Visualisierung übertragen werden und
wobei die dynamischen Daten mittels skalierbarer Vektorgrafiken visualisiert werden.

14. Verfahren nach Anspruch 13,
**dadurch gekennzeichnet,**
**dass** als Übertragungsvorrichtung (4) ein Intranet und/oder Internet verwendet wird.

15. Verfahren nach einem der Ansprüche 13 oder 14,
**dadurch gekennzeichnet,**
**dass** die dynamischen Daten durch einen Server (1a), insbesondere einen Web-Server, bereitgestellt werden.

16. Verfahren nach einem der Ansprüche 13 oder 14,
**dadurch gekennzeichnet,**
**dass** die dynamischen Daten durch ein Automatisierungsgerät mit Web-Server-Funktionalität (1b) bereitgestellt werden.

17. Verfahren nach einem der Ansprüche 13 bis 16,
**dadurch gekennzeichnet,**
**dass** die dynamischen Daten von einem Client, insbesondere einem Web-Client, empfangen werden und/oder dass die dynamischen Daten durch einen Browser visualisiert werden.

18. Verfahren nach einem der Ansprüche 13 bis 17,
**dadurch gekennzeichnet,**
**dass** die dynamischen Daten unabhängig von der Bildschirmauflösung und/oder dem Zoomfaktor dargestellt werden.

19. Verfahren nach einem der Ansprüche 13 bis 18,
**dadurch gekennzeichnet,**
**dass** die skalierbaren Vektorgrafiken mittels SVG, Scalable Vector Graphics, als Sprache erstellt werden.

20. Verfahren nach einem der Ansprüche 13 bis 19,
**dadurch gekennzeichnet,**
**dass** die dynamischen Daten in Form von WebServices von der ersten Vorrichtung (1) bereitgestellt werden.

21. Verfahren nach einem der Ansprüche 13 bis 20,
**dadurch gekennzeichnet,**
**dass** die von der ersten Vorrichtung (1) in Form von WebServices bereitgestellten dynamischen Daten durch die Mittel (3) zur Visualisierung auf- und/oder abgerufen werden.

22. Verfahren nach einem der Ansprüche 13 bis 21,
**dadurch gekennzeichnet,**
**dass** die dynamischen Daten durch die erste Vorrichtung (1) mittels Hidden Frames bereitgestellt werden.

23. Verfahren nach einem der Ansprüche 13 bis 19,
**dadurch gekennzeichnet,**
**dass** die aktualisierten dynamischen Daten von der ersten Vorrichtung (1) über einem Streaming Media Mechanismus zur zweiten Vorrichtung (2) übertragen werden.

24. Verfahren nach einem der Ansprüche 13 bis 23,
**dadurch gekennzeichnet,**
**dass** mit der zweiten Vorrichtung drahtlos über die Übertragungsvorrichtung (4) kommuniziert wird.

25. Client zur Darstellung und/oder Anzeige von dynamischen Daten zum Bedienen und Beobachten eines Prozesses, insbesondere von Prozessdaten eines Fertigungs- und/oder Herstellungsprozesses im Automatisierungsumfeld, mit
- einer Empfangseinrichtung (5) zum automatischen Empfang der dynamischen Daten über eine Übertragungsvorrichtung (4) und
- Mitteln (3) zur Visualisierung der dynamischen Daten,
wobei die dynamischen Daten mittels skalierbarer Vektorgrafiken visualisiert werden.

26. Client nach Anspruch 25,
**dadurch gekennzeichnet,**
**dass** der Client als Web-Client, ausgebildet ist und/oder dass die Mittel (3) zur Visualisierung der dynamischen Daten als Browser ausgebildet sind.

27. Client nach einem der Ansprüche 25 oder 26,
**dadurch gekennzeichnet,**
**dass** die dynamischen Daten für eine von der Bildschirmauflösung und/oder dem Zoomfaktor unabhängigen Darstellung vorgesehen sind.

28. Client nach einem der Ansprüche 25 bis 27,
**dadurch gekennzeichnet,**
**dass** als Sprache für die Erstellung der skalierbaren Vektorgrafiken SVG, Scalable Vector Graphics, vorgesehen ist.

29. Client nach einem der Ansprüche 25 bis 28,
**dadurch gekennzeichnet,**
**dass** der Client zur drahtlosen Kommunikation über die Übertragungsvorrichtung (4) vorgesehen ist.

30. Datenverarbeitungsvorrichtung mit Web-Server-Funktionalität, insbesondere Automatisierungsgerät mit Web-Serverfunktionalität und/oder Web-Server, zur Bereitstellung von dynamischen Daten zum Bedienen und Beobachten eines Prozesses, insbesondere eines Fertigungs- und/oder Herstellungsprozesses im Automatisierungsumfeld, wobei die bereitgestellten dynamischen Daten zur automatischen Übertragung über eine Übertragungsvorrichtung (4) an eine zweite Vorrichtung (2) vorgesehen sind.

31. Datenverarbeitungsvorrichtung nach Anspruch 30,
**dadurch gekennzeichnet,**
**dass** die Übertragungsvorrichtung (4) als Intranet und/oder Internet ausgebildet ist.

32. Datenverarbeitungsvorrichtung nach einem der Ansprüche 30 oder 31,
**dadurch gekennzeichnet,**
**dass** die Datenverarbeitungsvorrichtung zur Bereitstellung der dynamischen Daten in Form von WebServices vorgesehen ist.

33. Datenverarbeitungsvorrichtung nach einem der Ansprüche 30 bis 32,
**dadurch gekennzeichnet,**
**dass** die von der Datenverarbeitungsvorrichtung in Form von WebServices bereitgestellten Daten zum Aufruf und/oder Abruf durch auf der zweiten Vorrichtung vorhandene Mittel (3) zur Visualisierung vorgesehen sind.

34. Datenverarbeitungsvorrichtung nach einem der Ansprüche 30 oder 31,
**dadurch gekennzeichnet,**
**dass** die Datenverarbeitungsvorrichtung zur Bereitstellung der aktualisierten dynamischen Daten mittels Hidden Frames vorgesehen ist.

35. Datenverarbeitungsvorrichtung nach einem der Ansprüche 30 oder 31,
**dadurch gekennzeichnet,**
**dass** die Datenverarbeitungsvorrichtung zur Übertragung der aktualisierten dynamischen Daten über einen Streaming Media Mechanismus auf die zweite Vorrichtung (2) vorgesehen ist.
